# EUROPEAN PATENT APPLICATION

(11) **EP 1 702 825 A2**
(43) Date of publication of application: **20.09.2006**
(21) Application number: 06251161.3
(22) Date of filing: 03.03.2006
(51) Int. Cl.: B61D 17/12

(54) **Passenger cabin of a railway vehicle**

(30) Priority: 17.03.2005 JP 2005078152; 18.10.2005 JP 2005303020; 13.02.2006 JP 2006035715
(71) Applicant: HITACHI, LTD., Chiyoda-ku Tokyo 100-8280 (JP)
(72) Inventor: Todori, Seijiro c/o Hitachi, Ltd. , I.P. Group, Tokyo 100-8220 (JP); Tanii, Yasunori c/o Hitachi, Ltd. , I.P. Group, Tokyo 100-8220 (JP); Nishiyama, Kanji c/o Hitachi, Ltd. , I.P. Group, Tokyo 100-8220 (JP); Hirose, Shingo c/o Hitachi, Ltd. , I.P. Group, Tokyo 100-8220 (JP)
(74) Representative: Paget, Hugh Charles Edward

(57) **Abstract**

The invention provides a passenger cabin of a railway vehicle with increased interior space. A multifunction module (200) including an air conditioning duct (220), an illuminating apparatus (250), a speaker (260) and the like is disposed on a connecting portion (shoulder portion) between a roof structure (30) and a side structure (50) of a railway vehicle. A baggage rack bracket (310) and a hand strap bracket (350) are passed through and hung from the roof structure (30). A connecting block connecting the brackets (310) and (350) at the upper portions and being fixed to the air conditioning duct (220) is attached to the roof structure (20). Since the multifunction module (200) is fixed only to the roofstructure (30),theattaching operation thereof is facilitated. Since the air conditioning duct (220) is disposed on the shoulder portion, the height of the interior space of the vehicle at the center in the width direction of the car body can be increased. An inside panel (210) for improving the appearance of the multifunction module (200) is further disposed.

## Description

### BACKGROUND OF THE INVENTION

### Field of the invention

The present invention relates to railway vehicles having wider effective space within the passenger cabins so as to provide improved passenger service. The term "railway vehicle" includes railway cars, monorail cars and the like.

### Description of the related art

In the interior of a passenger cabin of a railway vehicle, in addition to facilities used directly by the passenger such as passenger seats, hand straps and overhead baggage racks, there are provided air conditioning apparatuses such as air conditioning ductsandfans,devicessuchaslighting apparatuses and speakers, and advertisements.

As disclosed in Japanese Patent Application Laid-Open Publication No. 11-222125 (patent document 1), according to the prior art railway vehicle, the ceiling portion of a vehicle body is equipped with air conditioning ducts, fans, speakers, illuminating equipments and banner hangers. Thus, the overhead space of passengers is restricted by the various equipments installed at the center in the width direction of the ceiling portion of the interior of the passenger cabin. In some car body structures, there are not even enough space for installing display terminals and banner advertisements.

Moreover, according to patent document 1, the shoulder interior panels are fixed via fixing members to side structures and roof structures of the car body, which are basic structural components of the car body. The shoulder interior panels are fixed to be bridged between the side structures and the roof structures which are long and wide. Therefore, according to production errors of the side structures and roof structures or the assembling errors thereof, the fixing positions of the shoulder inner panels may not correspond correctly with the side structures and the roof structure. Accordingly, the mounting operation of the shoulder inner panels may take too much time.

### SUMMARY OF THE INVENTION

Therefore, the object of the present invention is to provide a railway vehicle capable of creating a wide interior space. Actually, the present invention aims at expanding the overhead space within the passenger cabin by improving the structures and layouts of the service facilities for passengers disposed on the shoulder portions and ceiling portions of the interior of the passenger cabin of the car body, and aggregating the functions thereof.

The present invention provides a railway vehicle having an air conditioning duct disposed along a longitudinal direction of a car body, wherein an interior assembly including the air conditioning duct is disposed at or near the interior of the connection of the roof and a side of the railway vehicle (shoulder portion), and the interior assembly is attached to a roof structure of the railway vehicle.

Since the interior assembly is fixed to the roof structure, it is not so much influenced by production errors and assembly errors of the various blocks constituting the car body, and the attaching operation of the interior assembly to the roof structure can be performed easily.

### BRIEF DESCRIPTION OF THE DRAWINGS

FIG. 1 is a vertical cross-sectional view of a railway vehicle according to one embodiment of the present invention;
FIG. 2 is a view showing the ceiling seen from the interior of the car body of FIG. 1;
FIG. 3 is an A-A cross-section of FIG. 2;
FIG. 4 is a B-B cross-section of FIG. 2;
FIG. 5 is a C-C cross-section of FIG. 2;
FIG. 6 is an explanatory view of a duct unit for air conditioning;
FIG. 7 is an explanatory view of a multifunction module disposed at a right shoulder portion of FIG. 1;
FIG. 8 is a perspective view of a multifunction module disposed at a right shoulder portion of FIG. 1;
FIG. 9 is a vertical cross-sectional view of the duct unit for air conditioning;
FIG. 10 is a vertical cross-sectional view of the connecting portion between lower panels 223 and 223 of the duct unit for air conditioning;
FIG. 11 is a vertical cross-sectional view of a relevant portion of the duct unit for air conditioning according to another embodiment:
FIG. 12 is a plan view of a hinge portion of FIG. 11;
FIG. 13 is a vertical cross-sectional view during assembly of the hinge portion of FIG. 11; and
FIG. 14 is a vertical cross-sectional view of the duct portion for air conditioning according to another embodiment.

### DETAILED DESCRIPTION OF THE PREFERRED EMBODIMENTS

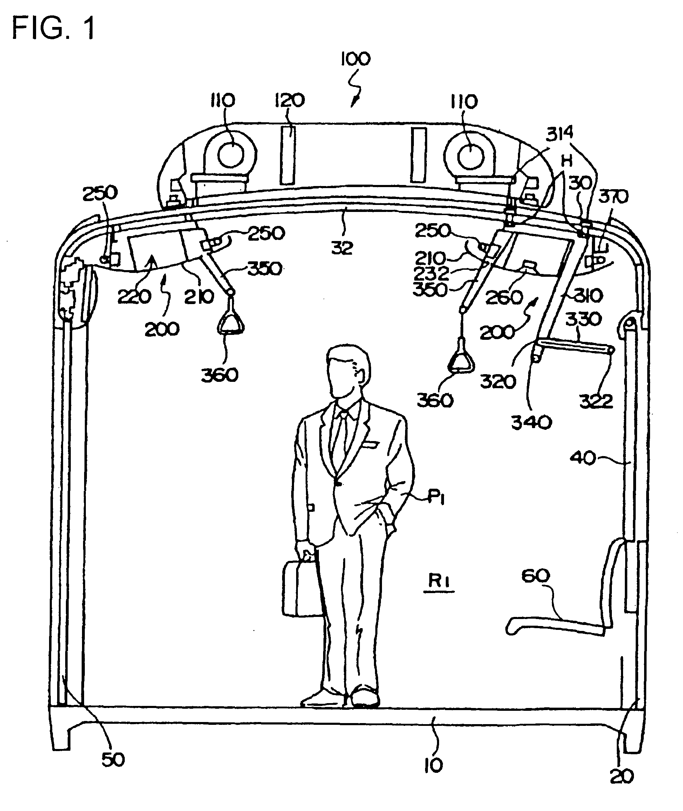

FIG. 1 is a cross-sectional view showing the general outline of a railway vehicle according to the present invention.

A car body of the railway vehicle denoted as a whole by reference number 1 is composed of an underframe 10, side structures 20, a roof structure 30 and so on. The side structure 20 includes window glasses 40 and doors 50 for entering and exiting the car body. A passenger cabin R1 is defined by the underframe 10, the side structures 20 and the roof structure 30. Moreover, passenger seats 60 are attached to the inner side of the side structures 20 to serve passenger P1. The longitudinal ends of the car body of the passenger cabin R1 are composed of end structures or passenger cabin partitions, but their reference numbers are omitted in the drawings.

An air conditioning unit 100 is disposed on the upper portion of the roof structure 30. The side structures 20 and the roof structure 30 are made up of aluminum alloy hollow extruded shape members. The air conditioning unit 100 is disposed on the roof of the car body and at substantially the center portion in the longitudinal direction of the car body.

A ceiling panel 32 is disposed on the interior of the roof structure 30, and multifunction modules 200 are disposed on shoulder portions at the connecting portions between the ceiling panel 32 and interior panels of the side structures 20 within the car body. In this embodiment, the interior assembly of the present invention is realized as the multifunction modules 200.

The air conditioning unit 100 includes air blowers 110 and interior-side heat exchangers 120. The present air conditioning unit 100 is an example of a so-called central air conditioning apparatus in which a single apparatus disposed on top of the roof of the car body is used to perform air conditioning of the passenger cabin. Other than the air conditioning unit 100, the air conditioning apparatus used in a railway vehicle includes a distribution-type apparatus in which plural air conditioning apparatuses are disposed on a roof of a single vehicle.

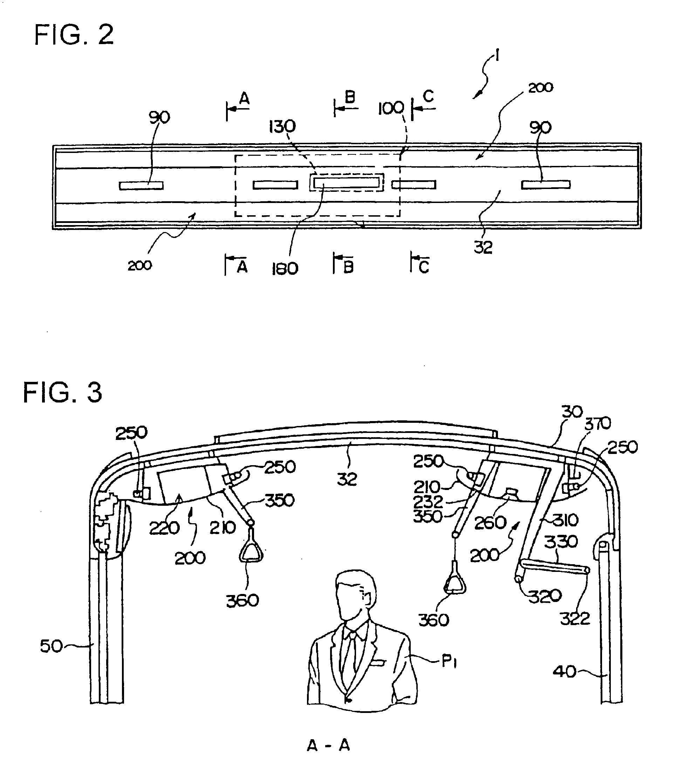

The multifunction module 200 includes as a main component thereof an air conditioning duct 220 for introducing the air-conditioning air supplied from the air conditioning unit 100 to the interior of the cabin R1. In addition to the air conditioning duct 220, the multifunction module 200 includes interior equipments such as illuminating apparatuses 250 for indirect lighting, speakers 260, cable gutters (not shown) and so on. An inside panel 210 is disposed on the portion of the multifunction module 200 facing the passenger cabin R1. The air conditioning duct 220 is disposed along the longitudinal direction of the car body, and the interior equipments are disposed on the side surface of the air conditioning duct 220. The speakers can be disposed on the bottom surface instead of the side surface. The inside panel 210 is disposed on the outer side of the air conditioning duct 220, that is, the lower surface in FIG. 3. The inside panel 210 is greater than the width of the air conditioning duct 220, and both width-direction ends of the inside panel 210 cover the lower side of the illuminating apparatuses 250 for indirect lighting. The inside panel 210 functions as a cover for the illuminating apparatuses 250 and the like, and improves the appearance thereof. The speakers 260 are disposed within the air conditioning duct 220. The audio emitting portions of the speakers 260 are provided on the inside panel 210 and facing downward from the air conditioning duct 220.

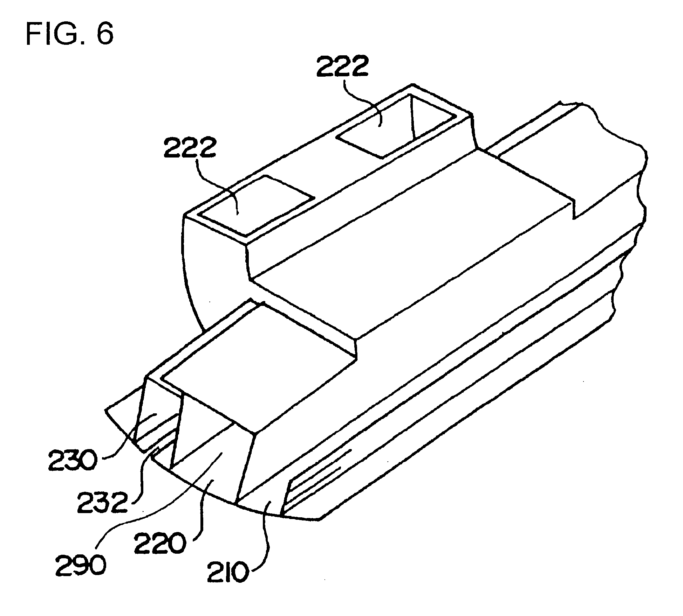

The inside panel 210 is a panel that covers the lower side of the multifunction module 200. The inside panel 210 also includes a plate covering a sub duct 230 (refer to FIG. 6) disposed on the lower side of a main duct 290 toward the center of the interior of the car body.

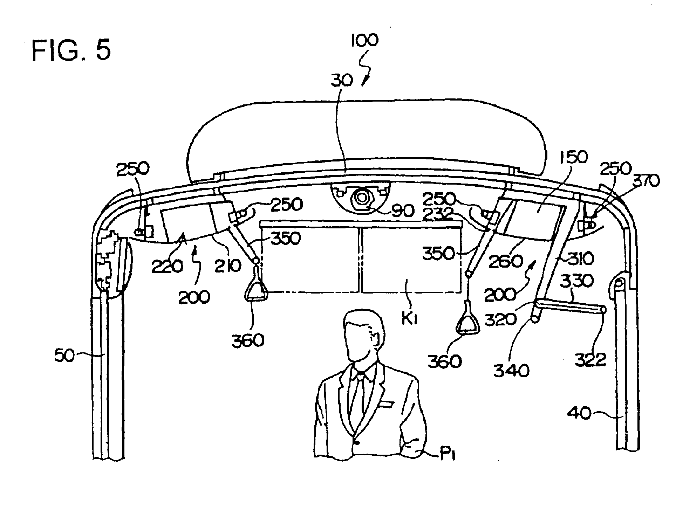

There is no long interior equipment disposed along the longitudinal direction of the car body between the left and right multifunction modules 200 and 200 at the center of the passenger cabin R1 in the width direction of the car body on the ceiling. A banner hanger K1 (refer to FIG. 5) is an example of the interior equipment disposed on the ceiling portion between the multifunction modules 200 and 200. The banner hanger K1 is hung from the roof structure 30 (or ceiling panel 32). Each multifunction module 200 is designed so that the width thereof in the width direction of the car body is approximately one-fourth of the width size of the roof structure 30. In other words, the width of each multifunction module 200 is smaller than half the width of the roof structure 30. Therefore, by installing the multifunction modules 200 at the shoulder portions inside the car, it is possible to ensure a maximum height of the ceiling portion between the multifunction modules 200 and 200.

Further, the multifunction module 200 includes a baggage rack bracket 310 and a hand strap bracket 350. The overhead baggage rack bracket 310 supports the overhead baggage rack 330. The overhead baggage rack 330 has a baggage receiving surface with a predetermined width formed continuously along the longitudinal direction of the car body, and both ends of the rack are supported by the baggage rack bracket 310. The hand strap bracket 350 is positioned closer to the center of the car body in the width direction than the baggage rack bracket 310 and supports the hand straps 360. These components are manufactured in advance as assembly parts of the multifunction module 200. The baggage rack bracket 310 and the hand strap bracket 350 are suspended perpendicularly from the inner surface portion of the roof structure 30, and are connected integrally by a connecting block 312 described in detail later. The baggage rack bracket 310 and the hand strap bracket 350 constitute an inversed U-shaped structure as a whole, and fixed to the roof structure 30 via the upper surface of the connecting block 312. The baggage rack bracket 310 and the hand strap bracket 350 are passed through the inside panel 210. One depth-direction end of the overhead baggage rack 330 is fixed to the baggage rack bracket 310, but the other end, which is the end close to the side structure 20, is not supported. The overhead baggage rack 330 is supported in the form of a cantilever by the baggage rack bracket 310.

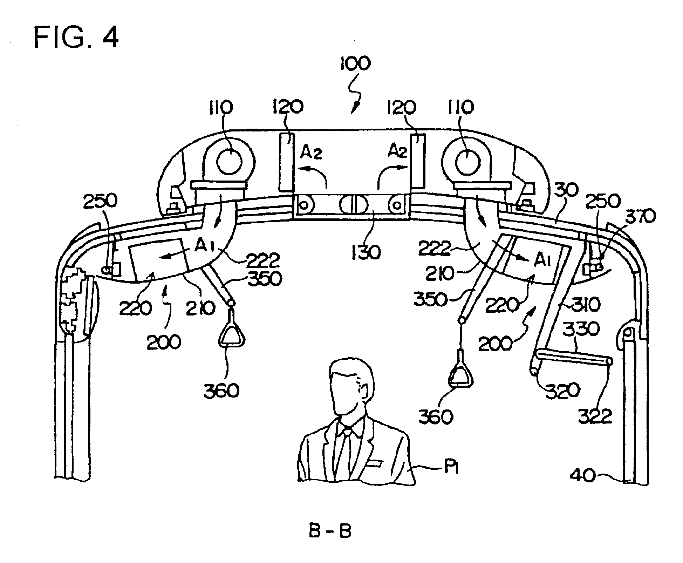

FIG. 2 is a bottom view of the ceiling portion when the ceiling panel 32 is viewed from the passenger cabin R1 in the car body 1. FIG. 3 is an A-A cross-section of FIG. 2, FIG. 4 is a B-B cross-section of FIG. 2, and FIG. 5 is a C-C cross-section of FIG. 2.

An air filter 130 (refer to FIG. 4) is disposed at substantially the center of the ceiling portion, that is, the center in the longitudinal direction of the car body and the center in the width direction thereof. Further, back flow fans (line flow fans, refer to FIGS. 2 and 5) 90 are disposed substantially at the center in the width direction of the car body and with a predetermined distance from each other in the longitudinal direction of the car body. An air conditioning unit 100 is disposed on the upper portion (at the exterior of the car body) of these devices. Further, a return port 180 (refer to FIG. 2) for introducing the return air from the passenger cabin R1 to the air conditioning unit 100 is disposed at the center of the ceiling portion. The back flow fans 90 are disposed so that their rotation axes are disposed along the longitudinal direction of the car body.

In FIGS. 1, 3 and 5, the multifunction module 200 disposed on the left side only includes a hand strap bracket 350 and does not include a baggage rack bracket 310. In the illustrated exemplified arrangement, the hand straps 360 on the left multifunction module 200 and the hand straps 360 on the right multifunction module 200 have different lengths. In this manner, the interior equipments such as the overhead baggage rack 330 and the hand straps 360 can be designed arbitrarily.

In FIG. 2, the air conditioning unit 100 is illustrated by dashed lines, and the upper portion of the return port 180 corresponds to the indoor equipment chamber. The area on the left side of the return port 180 corresponds to the outdoor equipment chamber of the air conditioning unit 100.

FIG. 4 shows a cross-sectional view of substantially the center of the car body in the longitudinal direction. The air conditioning unit 100 includes indoor-side air blowers 110, indoor-side heat exchangers 120, and an air filter 130. The return air A2 within the passenger cabin R1 passes through the air filter 130 and cooled by the heat exchanger 120. During heating operation, the return air A2 is heated by the heat exchanger 120.

The air-conditioning air A1 being cooled passes through a connecting duct 222 and into a main duct 290 constituting the air conditioning duct 220. The air-conditioning air A1 sent into the main duct 290 passes through a sub duct constituting a static pressure chamber in the manner described later, and is supplied into the passenger cabin R1.

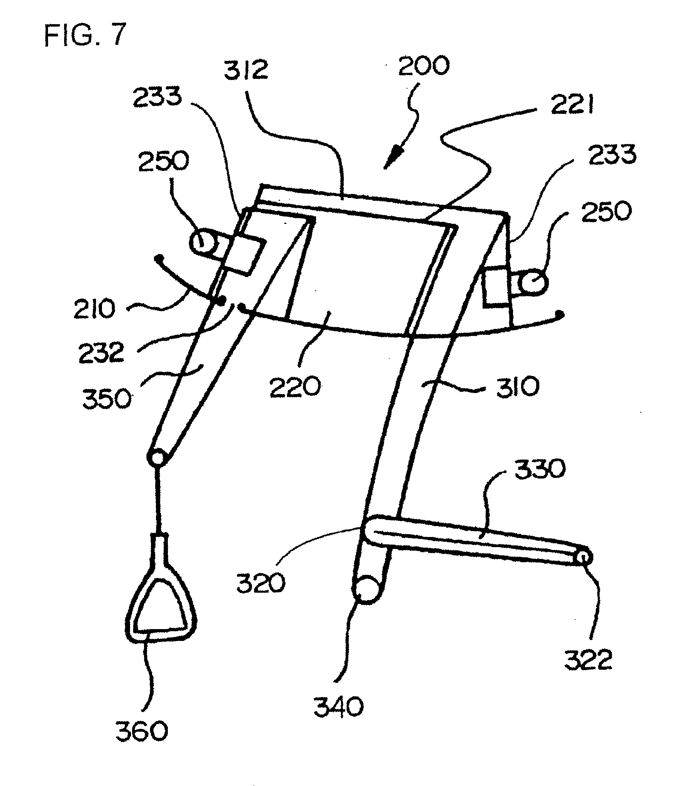

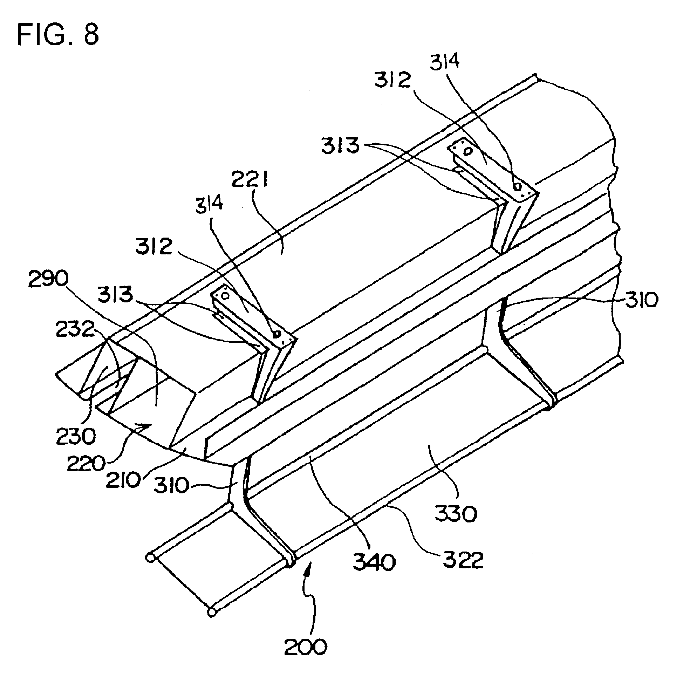

In FIG. 1, the function module 200 is brought up to the shoulder portion of the roof structure 30 within the cabin from the inner side of the passenger cabin R1, and fixed to position from the inner side of the passenger cabin R1. In another example, if the car body 1 is turned upside down for reverse fitting operation with the roof structure 30 positioned downward and the ceiling portion facing upward, the function module 200 is lowered into the cabin and fixed from the inner side of the passenger cabin R1. The fixture of the function module 200 is performed using T bolts 314 to the curtain rails disposed on the roof structure 30. The head portions of the T bolts 314 are inserted to the curtain rails and the screw portions of T bolts 314 are protruded from the curtain rails (refer to FIGS. 1 and 8). Holes formed to the connecting block 312 disposed on the upper portion of the function module 200 are passed through the screw portions mentioned above, and nuts are engaged from below to fix the same. The nuts can be secured using a tool inserted through clearance H on the left and right sides thereof or through work holes passing through the air conditioning duct. The nuts are disposed on the lower surface of the connecting block 312. Clearance H is a clearance formed between the upper end of the inside panel 210 and the lower side of the connecting block 312 at the center side of the passenger cabin R1. By the existence of this clearance H, tools can be inserted to secure the nut from the left side. The securing of the nut on the right side or the side close to the window is performed through a work hole for inserting the tool from below to the portion where the perpendicular block 233 or the cable gutter 370 and the like are disposed (refer to FIGS. 1 and 7). The portion of the connecting block 312 to be fixed to the roof structure 30 has an inversed U-shaped vertical cross-section, designed so that the nut is positioned between parallel perpendicular blocks. The "lower surface of the connecting block 312" mentioned earlier is the surface on which the nut contacts. Further, the baggage rack bracket 310 can be provided with work holes for inserting the tools and nuts to be engaged to the T bolts 314.

In FIG. 8, the upper portion of the perpendicular block constituting the air conditioning duct 220 is extended horizontally, and this horizontal block connects the air conditioning duct 220 and the connecting block 312 via screws 313. The curtain rail attached to the roof structure 30 for fixing members to be attached to the car body is disposed longitudinally along the longitudinal direction of the car body. The curtain rail has an inversed U-shaped cross-section. The head portion of the T bolts functioning as the engagement member is inserted to the groove of the aforementioned U-shaped cross-section so that the T bolt is supported by the curtain rail. The T bolt can be moved to desired positions on the curtain rail so as to fix the member to be attached to desired positions.

As described, the connecting blocks 312 connecting the baggage rack bracket 310 and the hand strap bracket 350 are attached to the roof structure 30 (more specifically, the curtain rail) by the engagement members composed of T bolts and nuts at the lower side of the roof structure 30 and at the upper side of the air conditioning duct. The multifunction module 200 is attached to the roof structure 30 by fixing the connecting block 312.

FIG. 5 is a cross-sectional view taken at the installation position of the back flow fan 90 for recycling the air within the passenger cabin. The back flow fan 90 is an equipment for forcibly sending the air-conditioning air blowing out from the air conditioning duct 220 into the passenger cabin. Therefore, if the railway vehicle is designed so that the air blown from the air conditioning duct is sufficient to send the air thoroughly into the passenger cabin, there is no need to install the back flow fan.

Furthermore, banner hangers K1 and the like can be disposed if necessary on the ceiling at the center of the car body in the width direction. Instead of the banner hangers K1, it is possible to attach display terminals for displaying images and the like.

At any rate, according to the railway vehicle of the present invention, there is a wide space ensured at the ceiling portion in the center in the width direction of the car body, so the banner hangers K1 or display terminals and the like canbe attached to the ceiling with minimum interference with the passengers.

FIG. 6 illustrates a detailed structure of the air conditioning duct 220 constituting the mult if unction module 200.

The air conditioning duct 220 having the inside panel 210 disposed on the lower surface thereof is communicated with the indoor air blower of the air conditioning unit via a connecting duct 222. The air conditioning duct 220 is composed of a main duct 290 and a sub duct 230. The sub duct 230 is disposed adjacent to the main duct 290. The sub duct 230 is communicated with the main duct 290 via communication holes disposed at predetermined intervals on the separation wall between the main duct 290. The air-conditioning air is supplied from the main duct 220 via the communication holes to the sub duct 230.

The sub duct 230 constitutes a static pressure chamber, and feeds the air-conditioning air to the interior of the passenger cabin via slits 232 formed on the cabin-side wall of the sub duct 230. The air conditioning duct 220 excluding the connecting duct 222 is formed of aluminum alloy extruded shape members, to which the connecting duct 222 is attached. The inside panel 210 can be formed integrally with the air conditioning duct 220. A heat insulating member is attached to the inner side of the main duct 290, the sub duct 230 and the connecting duct 222 constituting the air passage.

FIGS. 7 and 8 are explanatory views showing the structure of the multifunction module 200. The baggage rack bracket 310 and the hand strap bracket 350 are formed integrally of cast metal. The upper ends of the baggage rack bracket 310 and the hand strap bracket 350 are connected via a connecting block 312. The connecting block 312 is attached to the curtain rail (not shown) on the roof structure 30. The perpendicular blocks of the baggage rack bracket 310 and the hand strap bracket 350 are passed through the inside panel 210. The upper panel 221 of the air conditioning duct 220 is connected to the connecting blocks 312 of the baggage rack bracket 310 and the hand strap bracket 350 via screws 313. The screws 313 are tightened from the side of the connecting blocks 312 toward the upper panel 221 to engage the two members. The main duct 290 constituting the air conditioning duct 220 is disposed between the baggage rack bracket 310 and the hand strap bracket 350 along the longitudinal direction of the car body.

The illuminating apparatuses 250 disposed on both sides of the air conditioning duct 220 are fixed to seats provided on the perpendicular blocks 233 formed of extruded shape members and provided integrally with the inside panel 210 (refer to FIG. 7). Further, the illuminating apparatus 250 disposed on the center in the width direction of the car body is attached to the side surface of the sub duct 230.

The hand strap brackets 350 for supporting the hand straps 360 are also disposed to pass through the air conditioning duct 220. In FIG. 7, the hand strap bracket 350 is disposed so as to block the sub duct 230. However, as described, the air-conditioning air is designed to be supplied from the main duct 290 via connecting holes to the sub duct 230. Therefore, the existence of the hand strap bracket 350 does not affect the sub duct 230.

The front edge portion 320 (near the center in the width direction of the car body) of the overhead baggage rack 330 is fixed to the baggage rack bracket 310, and the lower end of the baggage rack bracket 310 extends below the front edge portion 320. A plurality of baggage rack brackets 310 is disposed along the longitudinal direction of the car body. On the lower ends of the plurality of baggage rack brackets 310 is disposed a gripping rod 340 that extends along the longitudinal direction of the car body. The gripping rod 340 is arranged substantially horizontally and disposed so as to connect the lower ends of the plurality of baggage rack brackets 310. The gripping rod 340 is provided for passengers to grip. Hand straps can be attached to the gripping rod 340. The overhead baggage rack 330 is fixed to the baggage rack brackets 310. The baggage receiving portion (between the front edge portion 320 and the rear edge portion 322) of the overhead baggage rack 330 is disposed substantially horizontally. Moreover, the baggage receiving portion is extended toward the side structure and has a predetermined width. The baggage receiving portion is formed for example of metallic nets or synthetic resin plates.

The rear edge portion 322 of the baggage rack 330 is not fixed to the side structure 20, and a clearance is maintained therebetween. The overhead baggage rack 330 is designed to have a cantilever structure, so that if there is fear that the bonding strength of the front rim portion 320 is insufficient, a supporting member can be added between the upper portion of the baggage rack bracket 310.

According to this arrangement, the multifunction module 200 is fixed only to the roof structure 30, so that the mounting operation thereof is facilitated compared to the case where the module is bridged between the roof structure and the side structure. That is, since the multifunction module 200 is not bridged between the roof structure 30 and the side structure 20, the module is not affected by the deformation caused by the bonding of the roof structure 30 and the side structure 20 or the production errors thereof. Therefore, the multifunction module 200 can be mounted easily to the roof structure 30.

Furthermore, the multifunction module 200 including the air conditioning duct 220 and the illuminating apparatuses 250 is disposed on the shoulder portion in the interior of the car body and at both width-direction sides of the car body. Therefore, no interior components are disposed on the ceiling portion at the center in the width direction of the car body, so the height from the floor surface to the ceiling portion can be increased compared to the prior art structure. Moreover, the appearance of the ceiling portion is improved. It is possible to attach banner hangers K1 and the like to the ceiling portion.

The multifunction module 200 is assembled in advance outside the car body to the state as illustrated in FIG. 8, and then carried into the car body to be mounted on the shoulder portion within the car body.

After using the air conditioning unit 100 for a long period of time, it becomes necessary to clean the air conditioning unit 100 and the air conditioning duct 220. The cleaning of the air conditioning unit 100 is performed in a well-known manner.

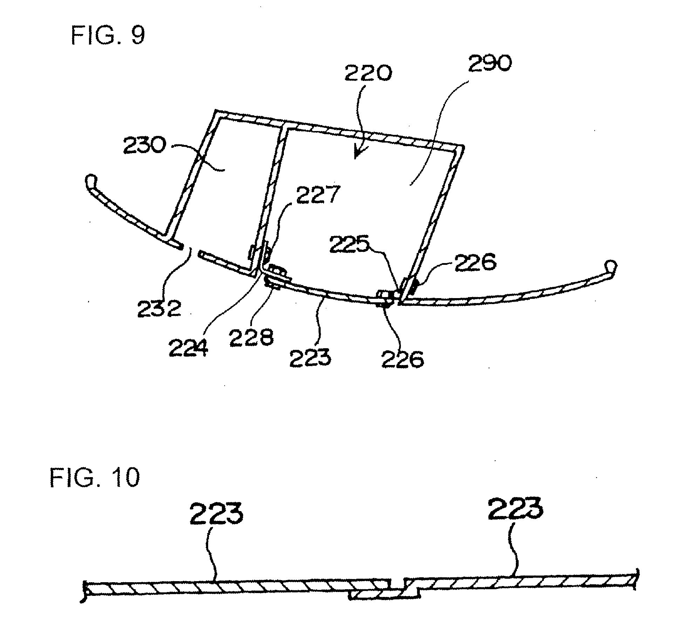

The cleaning of the air conditioning duct 220 is performed either in the state where the air conditioning duct 220 is attached to the ceiling plate 32 or is removed from the ceiling. In FIG. 9, the lower panel 223 of the main duct 290 facing the cabin (constituting the lower surface of the air conditioning duct 220) can be opened downward. The outer end of the lower panel 223 in the width direction of the car body is fixed to the side panel of the main duct 290 via hinges 225. The other end of the lower panel 223 (the end closer to the center in the width direction of the car body) is attached to a bracket 224 having an L-shaped cross-section that is fixed to the other side panel of the main duct 290. Actually, the other end of the lower panel 223 is attached to the horizontal block of the bracket 224 via screws 228. The perpendicular block of the bracket 224 and the side panel of the main duct 290 are attached via screws 227. A hinge 225 is attached by having its both side plates attached via screws 226 to the side panel and the lower panel 223 of the main duct 290. The bracket 224 can be manufactured by aluminum alloy extruded shape members integrally with the main duct 290. Further, rivets can be used instead of screws 226.

The worker stands on a stepladder, loosens the screws 226, opens the lower panel 223 downward and cleans the interior of the main duct 290. What is meant by opening the lower panel 223 is that the lower panel 223 is suspended perpendicularly by pivoting around the hinge 225. Since the lower panel 223 pivots toward the side structure, it will not be in the way of the worker standing near the center in the width direction of the car body than the lower panel 223.

A maximum opening is obtained if the lower panel is suspended in the perpendicular direction, but there is no need to fully open the panel to the perpendicular position.

A heat insulating member is adhered to the interior of the main duct 290, which is not illustrated.

Since the lower panel 223 is disposed between the baggage rack bracket 310 and the hand strap bracket 350, opening of the lower panel 223 and the cleaning of the main duct can be performed easily. Further, since the lower panel 223 has one end supported via the hinge 225, the cleaning operation of the interior of the main duct 290 is facilitated since there is no need to remove the lower panel 223.

Moreover, as illustrated in FIG. 10, the connecting portion of adjacent lower panels 223 and 223 in the longitudinal direction of the car body is disposed so that the lower panel at the lower stream side of the flow of air-conditioning air is overlapped from below to the end of the lower panel on the upper stream side. The overlapped portion can be fixed from below via screws.

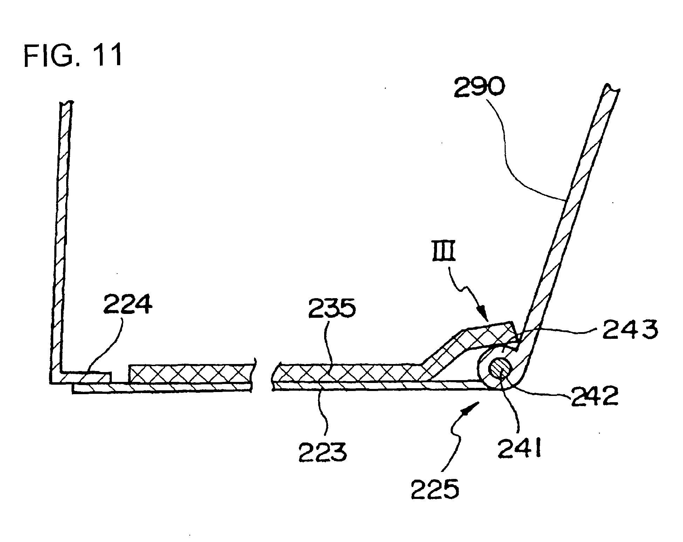

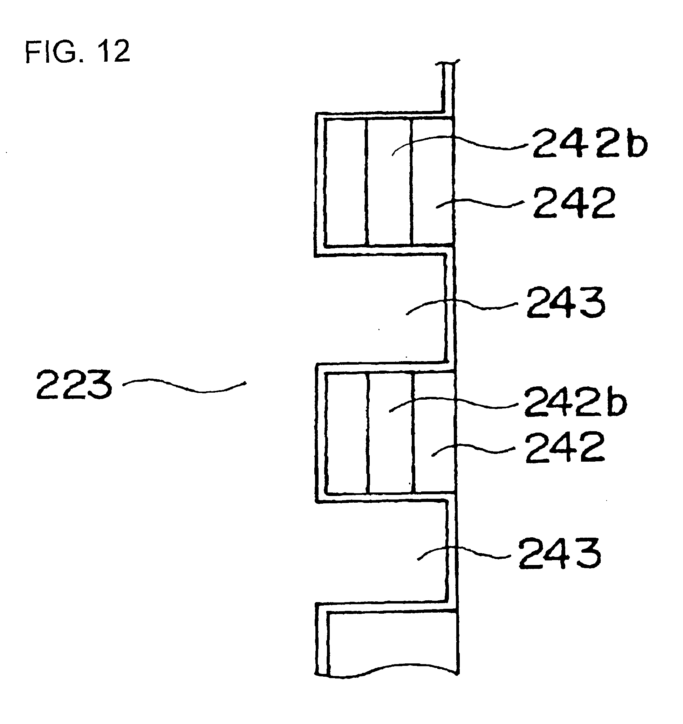

The embodiment of FIGS. 11 and 12 will now be described. According to this embodiment, the hinge 225 is not formed as a separate component of the main duct 290, but is integrally formed thereto. A center pin 241 of the hinge 225 is passed through a hole 242 formed to the main duct 290. The hole 242 is formed along the longitudinal direction of the car body. The hole 242 is formed during manufacture of the main duct 290 using aluminum alloy extruded shape members. As illustrated in FIG. 12, the center pin 241 is fixed to a pin supporting portion 243 of the lower panel 223. Notches are formed to the pin supporting portion 243 at predetermined intervals in the longitudinal direction of the car body, and the center pin 241 is disposed in the notches. The hinge receive portion formed to the main duct 290 and the pin support portion are formed to mutually fit with each other as illustrated in FIG. 12. The hinge receiver portion has an opening portion 242b through which the center pin 241 is inserted. The opening 242b has a width enabling a notch 241b formed to oppose to the outer circumference of the center pin 241 to be inserted thereto. When the lower panel 223 is positioned substantially perpendicularly, the center pin 241 can be inserted to the opening 242b.

In FIG. 12, the heat insulating member 235 disposed in the main duct 290 is not illustrated. The pin supporting portions 243 and the hinge receive portions that support the center pin 241 are disposed alternately along the longitudinal direction of the car body. The lower panel 223 and the main duct 290 are connected via the center pin 241.

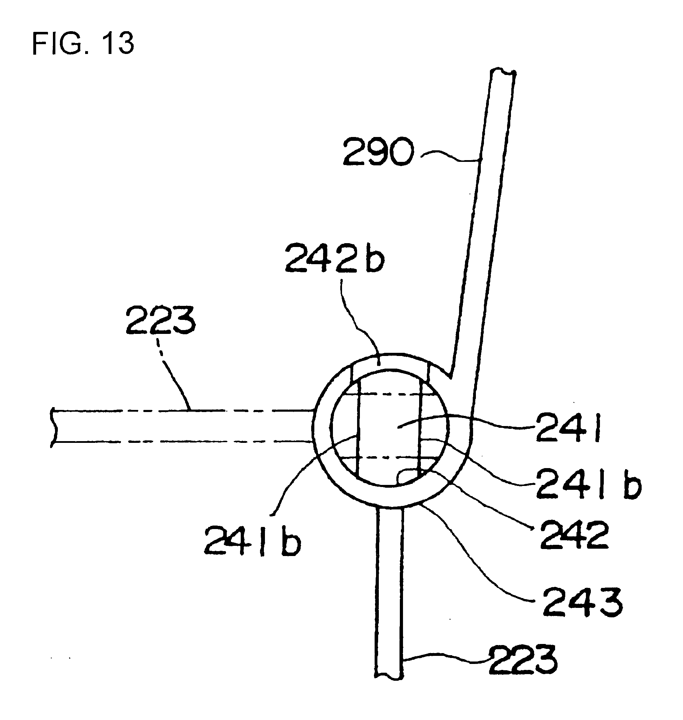

In FIG. 13 showing the state in which the lower panel 223 is positioned perpendicularly, notches 241b and 241b are formed on both sides of the center pin 241. Notches 241b and 241b are formed so as to enable the center pin 241 to be easily inserted to the opening portion 242b. The width of the center pin 241 at the portion corresponding to notches 241b and 241b is smaller than the width of the opening portion 242b. The center pin 241 of the lower panel 223 is inserted from above the hinge receive portion of the main duct 290. Since the surfaces of the notches 241b and 241b are cut, the center pin 241 can be inserted easily to the hole 242. After inserting the center pin 241 to the hinge receive portion, the lower panel 223 is pivoted to the horizontal direction (illustrated by imaginary lines).

At this time, since the notches of the center pin 241 are positioned in the horizontal direction, the center pin 241 will not fall out from the opening portion 242b of the hole 242.

As shown in FIG. 11, a heat insulating member 235 is adhere to the upper surface of the lower panel 223, and the right end of the heat insulating member is in contact with the perpendicular surface of the main duct 290. The heat insulating member 235 is flexible. The right end of the heat insulating member 235 is disposed toward the right than the center pin 241, and the left end thereof is disposed toward the right than the right end of the bracket 224. According to this arrangement, the heat insulating member 235 will not be caught between the bracket 224 and the lower panel 223. It is possible to form the bracket 224 integrally with the main duct 290.

Since the heat insulating member 235 is adhered to the upper surface of the lower panel 223 and the right end of the member is attached to the perpendicular wall of the main duct 290, the clearances formed around the center pin 241 is sealed and the air-conditioning air is prevented from leaking therethrough. Further, the interior of the main duct 290 is not easily seen from the passenger cabin.

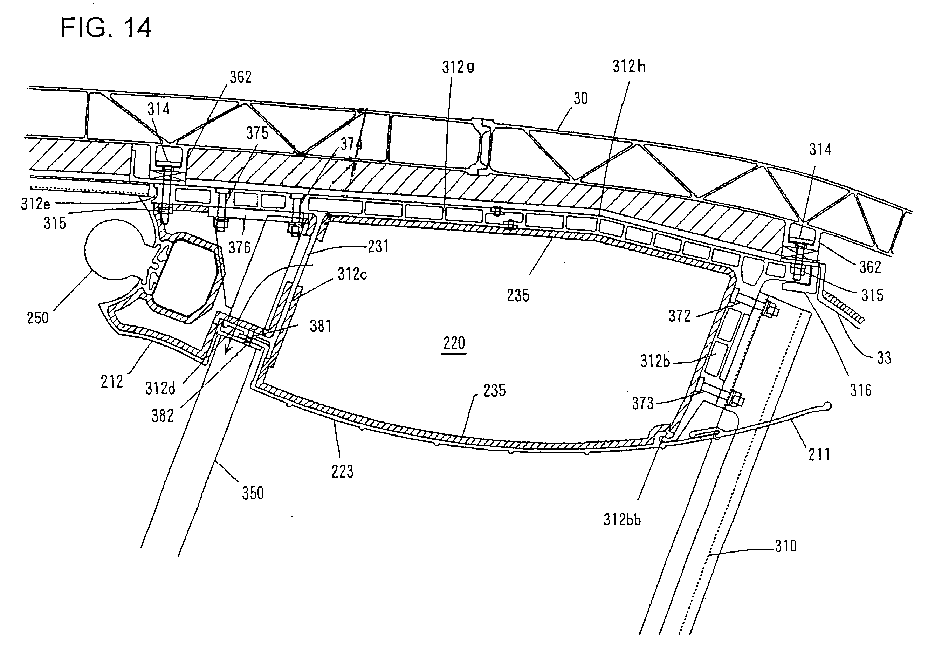

Next, another embodiment of the present invention will be described with reference to FIG. 14. In FIG. 14, the connecting block 312 is formed as a separate member from the baggage rack bracket 310 and the hand strap bracket 350. The connecting block 312 is formed of a hollow extruded shape member made of aluminum alloy. The connecting block 312 is formed by connecting left and right connecting block parts 312g and 312h at substantially the center in the width direction thereof so that the multiple shape members are formed as a single member. The connecting can be performed using rivets or by welding.

The connecting block 312 is attached from below to curtain rails 362 and 362 disposed on the lower surface of the roof structure 30 of the car body at both ends in the width direction of the car body via T bolts 314 and 314. However, at the window-side end thereof, the T bolt 314 is used to fix an L-shaped member 316. It is necessary that the L-shaped member 316 has an L-shaped cross-section, but it is also possible to extend a portion thereof to form a U-shaped cross-section. The opened end of the L-shaped or U-shaped member 316 faces the center of the width direction of the car body (or to the left). The right end of the connecting block 312 is pushed from the center side into the space in the L-shaped (U-shaped) member 316 and fixed thereto. The reason for using the L-shaped (U-shaped) member 316 is because it is difficult to rotate the nut to be engaged to the T bolt 314 from below. The T bolt 314 and the nut 315 for engagement therewith constitute a fastening member. The L-shaped (U-shaped) member 316 enables the nut to be rotated from the center side. Other than the L-shaped (U-shaped) member, the curtain rail 362 has an adjacent decorative panel 33 fixed thereto.

The connecting block 312 constitutes the air conditioning duct 220, and the upper surface of the duct is composed of the connecting block 312. A window-side side panel 312b and a center-side side panel 312c of the interior of the cabin are formed integrally with the left and right connecting blocks 312. The center-side side panel 312c is disposed closer to the window than the hand strap bracket 350. The hand strap bracket 350 is disposed closer to the center than the side panel 312c of the connecting block 312 and connected to the curtain rail on the upper side of the connecting block 312 via T bolts 374 and 375. The T bolts 374 and 375 are disposed at two locations in the width direction of the car body. The baggage rack bracket 310 is attached to the window-side side panel 312b via bolts 372 and 373 at two upper and lower locations from the window. A support seat 376 for supporting the T bolts 374 and 375 can be disposed as a separate member from the connecting block 312. The support seat 376 is mounted on the recessed portion of the connecting block 312. Thereby, the support seat 376 can be integrated with the connecting block 312.

The lower panel 223 constituting the air conditioning duct 220 is hung on a lower end portion 312bb of the window-side side panel 312b. The lower end portion 312bb has a circular cross-section, and enables the lower panel 223 to be pivoted in the vertical direction. In other words, this portion functions as a hinge. The other end of the lower panel 223 (the end on the center side) is engaged via a screw 381 from below to a horizontal panel 312d protruded toward the center from the center-side side panel 312c or protruded toward the center side of the car body than the width of the air conditioning duct. The screw 381 is a flat-head screw. By tightening and loosening the screw 381, the lower panel 223 can be opened and closed in the vertical direction by pivoting around the lower end of the window-side side panel 312b. The lower panel 223 can be inserted diagonally from underneath to the end portion 312bb so that the end portion 312bb is sandwiched from above and below. What is meant by sandwiching the end portion is that the lower panel 223 is attached to a shielding panel 211 at this portion.

A hole 231 formed on the center-side side panel 312c of the air conditioning duct 220 is an outlet for the air-conditioning air. The hole 231 is formed closer to the center side than the side panel 312c (in other words, the outer side of the air conditioning duct 220). The air-conditioning air passing through the hole 231 flows through shielding panels 211 and 212 and a slit 232 (not shown in FIG. 14) provided on the overlapped portion of the heat insulating member 235 to be blown into the passenger cabin. Screws 381 and 382 are provided where the slit 232 is not formed.

A shielding panel 211 is removably attached to the window-side end of the window-side side panel 312b of the lower panel 223 for covering the joint portion between the bracket 310 and the connecting block 312 or the side panel 312b formed of extruded shape members. The shielding panel 211 can be moved in the horizontal direction. The portion (including the surrounding) of the shielding panel 211 through which the bracket 310 is passed is cut and removed. The shielding panel 211 is fit to the end of the lower panel 223 by horizontally moving the same from the window side after the mounting of the bracket 310 is completed.

The connected portion between the bracket 350 and the connecting block 312 or the side panel 312c formed of extruded shape members is covered from below by the shielding panel 212. The upper end of the shielding panel 212 is hung on the center-side end 312e of the connecting block 312. What is meant by "hung on" is that the members are connected. The lower end portion of the shielding panel 212 is engaged to a horizontal panel 312d from underneath with ascrew382. The width-direction positions of the screw 381 and screw 382 are substantially the same but the axial positions thereof are different. The screw 382 is a flat-head screw. An opening (not shown) for discharging the air-conditioning air into the passenger cabin is formed on the shielding panel 212. Further, interior lightings 250 and the like are provided on the shielding panel 212.

A heat insulating member is attached to the upper panel 221, the window-side side panel 312b, the center-side side panel 312c, the lower panel 223 and the shielding panel 212 formed of extruded shape members exposed to air-conditioning air.

According to this arrangement, it is possible to put a hand in the air conditioning duct to clean the interior of the duct by releasing the engaged screws 382 and 381 and pivoting the lower panel 223 downward.

Furthermore, since the engaged portions of the brackets 310 and 350 are covered by shielding panels 211 and 212, the appearance thereof is prevented from being deteriorated.

The present invention is characterized in that in the railway vehicle having an air conditioning duct disposed along a longitudinal direction of the car body, the air conditioning duct constitutes an interior assembly, wherein the interior assembly is attached to a roof structure constituting the car body, the width of the interior assembly is formed narrower than half the width of the roof structure, and the interior assembly is attached at a shoulder portion within the car body to the roof structure.

In addition to the aforementioned characteristic properties, the present invention characterizes in that the interior assembly is fixed at two locations in the width direction of the car body to the roof structure.

## Claims

1. A railway vehicle having an air conditioning duct disposed along a longitudinal direction of the car body, wherein
an interior assembly including the air conditioning duct is arranged on a shoulder portion within a cabin of the car body; and
the interior assembly is attached to a roof structure of the railway vehicle.

2. The railway vehicle according to claim 1, wherein
the interior assembly includes, in addition to the air conditioning duct, at least one interior equipment selected from a group consisting of an illuminating apparatus, a speaker and a cable gutter, and a baggage rack bracket and a hand strap bracket.

3. The railway vehicle according to claim 2, wherein
the interior equipment is disposed either on a side surface or a bottom surface of the air conditioning duct.

4. The railway vehicle according to claim 2, wherein
the baggage rack bracket and the hand strap bracket are suspended in the perpendicular direction, and the air conditioning duct is arranged to extend between the two brackets; and
a baggage rack is disposed on the baggage rack bracket.

5. The railway vehicle according to claim 4, wherein
the baggage rack bracket and the hand strap bracket are connected by a member below the roof structure and above the air conditioning duct; and
the member is attached to the roof structure from below.

6. The railway vehicle according to claim 4, wherein
the lower panel of the air conditioning duct is attached to the air conditioning duct in a pivotable manner toward the downward direction with a pivoting center disposed at a window-side end thereof in the width direction of the car body, and an end of the lower panel close the center of the cabin is removably attached to the air conditioning duct.

7. The railway vehicle according to claim 1, wherein
the air conditioning duct is composed of an extruded shape member;
the window-side end of the extruded shape member is fit to a member attached to a curtain rail on the roof structure of the car body from the center direction in the width direction of the car body;
the center side of the extruded shape member is attached to the roof structure of the car body; and
the baggage rack bracket and the hand strap bracket are attached to the extruded shape member.

8. The railway vehicle according to claim 7, wherein
the lower panel of the air conditioning duct is formed as a separate member from the other three panels including the window-side and center-side side panels of the air conditioning duct;
one end of the lower panel is hung on a lower end portion of the window-side side panel; and
the other end of the lower panel is protruded toward the center of the car body than the width of the air conditioning duct, and removably attached from below to a panel protruded toward the center from the center-side side panel.

9. The railway vehicle according to claim 8, wherein
on the window side of the lower panel of the air conditioning duct is attached a shielding panel for covering the connecting portion between the baggage rack bracket and the extruded shape member; and
the shielding panel is fixed to a window-side end of the lower panel.

10. The railway vehicle according to claim 8, wherein
a shielding panel is attached to the center side of the car body of the lower panel of the air conditioning duct that covers the connecting portion between the hand strap bracket and the extruded shape member at the center side of the car body; and
the shielding panel is fixed from below to a panel protruded toward the center of the cabin.

11. The railway vehicle according to claim 10, wherein
the upper end of the shielding panel is engaged to the extruded shape member.
